# EUROPÄISCHE PATENTANMELDUNG

(11) **EP 0 802 598 A2**
(43) Veröffentlichungstag der Anmeldung: **22.10.1997**
(21) Anmeldenummer: 97105687.4
(22) Anmeldetag: 07.04.1997
(51) Int. Cl.: H02B 15/00

(54) **Fronttafelmodul**

(30) Priorität: 18.04.1996 DE 19615347
(71) Anmelder: SIEMENS AKTIENGESELLSCHAFT, 80333 München (DE)
(72) Erfinder: Weiss, Peter, Dipl.-Ing. (FH), 92262 Birgland (DE)

(57) **Zusammenfassung**

Das erfindungsgemäße Fronttafelmodul (1) dient zur Direktanbindung von Befehls-/Meldegeräten an ein Bussystem. Es umfaßt ein Gehäuse (8), das am Boden eine Trägerleiterplatte (9) mit vier Befehlsstellen (2), einem Busmodul (5) und einem DIP-Schalter (7) aufweist und das in seinen Abmessungen vier, in einer Fronttafel nebeneinander eingebauten Befehls-/Meldegeräten angepaßt und auf diese von der Rückseite der Fronttafel aufmontierbar ist.

## Beschreibung

Die Erfindung bezieht sich auf ein Fronttafelmodul.

Hintergrund des mit der vorliegenden Erfindung zu lösenden Problems, ist die elektrische Verbindung von Befehls- und Meldegeräten, die in einer Fronttafel eingebaut sind, mit einer Steuerung. Dies wird üblicherweise mittels einzelner Drahtlitzen durchgeführt, was einen sehr großen Verdrahtungs- und damit Material- und Zeitaufwand erfordert und andererseits mit einer beträchtlichen Fehlerhäufigkeit verbunden ist. Eine Alternative hierzu ist die Verwendung von Schaltelementen mit Lötanschluß und einer vorgefertigten Leiterplatte, die auf der Befehlsgeräterückseite montiert wird. Auf diese Weise läßt sich zwar der Montageaufwand und die Fehlerhäufigkeit vermindern, doch muß für jede Schalttafel wegen der mangelnden Flexibilität eine eigene Leiterplatte bereitgestellt werden, was kostenaufwendig ist und zudem die Montage seitens der Kunden ziemlich erschwert.

Im wesentlichen sind drei Möglichkeiten bekannt, Befehls- und Meldegeräte, die in einer Fronttafel montiert sind, zu verdrahten. Die erste besteht in der Einzelverdrahtung, wobei auf die Befehlsgeräte Schaltelemente mit Schraub- oder Steckanschluß montiert sind und zu jedem Schalt- oder Lampenelement zwei Einzeladern führen. Bei der zweiten Lösung werden die Befehlsgeräte ebenfalls über einzelne Leitungen mit einem Busmodul verdrahtet, das mit einer Steuerung über ein Buskabel verbunden ist. Schließlich ist noch die Verwendung eines Busmoduls mit Lötanschluß bekannt. Das Modul wird gemeinsam mit Lötschaltelementen auf eine Trägerplatte gelötet, deren Leiterbahnen die elektrische Verbindung herstellen. Die Trägerleiterplatte wird über Distanzbolzen den entsprechenden Befehlsgeräten zugeordnet.

Der Erfindung liegt die Aufgabe zugrunde ein Frontmodul zu schaffen, das bei einfachem Aufbau, einfacher und zuverlässiger Montage die Möglichkeit zur Konfiguration mehrerer Befehlsstellen bietet.

Die Aufgabe wird erfindungsgemäß mit einem Fronttafelmodul mit den Merkmalen nach Anspruch 1 gelöst. Dies ist ein Fronttafelmodul zur Anbindung einer Gruppe von Befehls-/Meldegeräten, die in einer Fronttafel eingebaut sind, an eine Busleitung, mit einem Gehäuse, das eine Kontaktierungseinrichtung zum Anschluß an die Busleitung, ein Busmodul mit mehreren Ein- und/oder Ausgängen und mehrere Befehlsstellen aufweist, die dem Raster der Befehls-/Meldegeräte angepaßt angeordnet und mit den Ein- und/oder Ausgängen verbunden sind. Diese Ausführung bietet den besonderen Vorteil, daß durch eine Palette mit verschiedenen Gehäusen, die vier, drei und eine Befehlsstelle bedienen, sämtliche Variationen von Befehlsstellenanordnungen in Fronttafeln abgedeckt werden können.

Weitere vorteilhafte Ausbildungen der Erfindung sind den Unteransprüchen 2 bis 5 zu entnehmen.

Ein Ausführungsbeispiel der Erfindung wird im folgenden anhand einer Zeichnung näher erläutert. Es zeigen:
- FIG 1: eine elektrische Schaltung des erfindungsgemäßen Fronttafelmoduls,
- FIG 2: eine Innenansicht des erfindungsgemäßen Fronttafelmoduls,
- FIG 3,4: Unteransichten des Fronttafelmoduls gemäß FIG 2 mit unterschiedlichen Kontaktierungseinrichtungen und
- FIG 5: die Unteransicht des Fronttafelmoduls gemäß FIG 2 mit kontaktierter, formcodierter Busleitung.

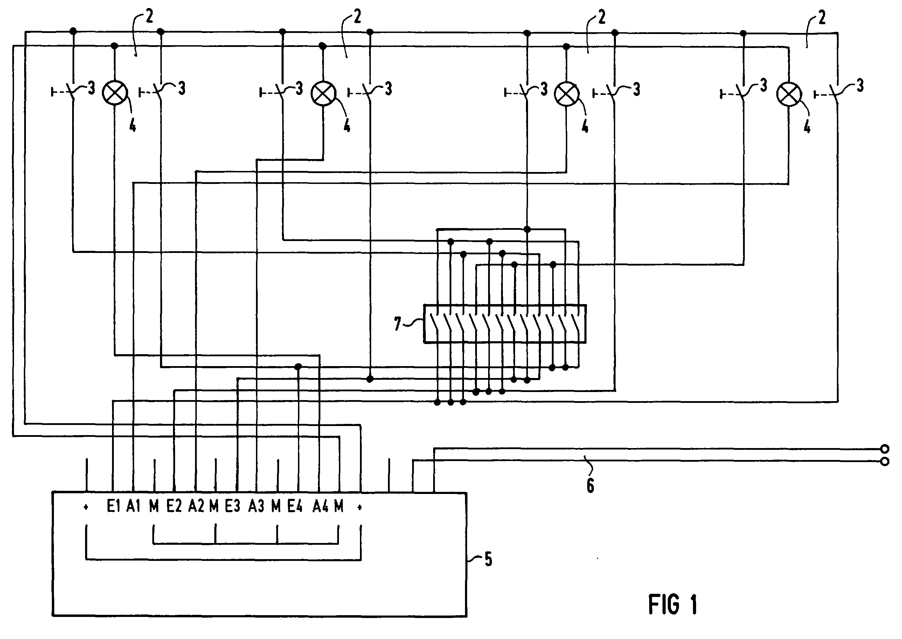

FIG 1 zeigt den schaltungsmäßigen Aufbau eines erfindungsgemäßen Fronttafelmoduls 1 mit vier Befehlsstellen 2, die hier jeweils zwei Schaltkontakte 3 und eine Lampenfassung 4 aufweisen. Zur Schaltung gehört weiterhin ein ASI-Busmodul 5 (**A**ktuator-**S**ensor-**I**nterface) mit vier Eingängen E1,E2,E3,E4, vier Ausgängen A1,A2,A3,A4 und einem Gleichspannungsanschluß, an dem eine ASI-Busleitung 6 angeschlossen ist, die hier als formcodiertes zweiadriges Flachkabel ausgeführt ist. Das ASI-Busmodul 5 stellt ein Zwischenglied zwischen der ASI-Busleitung 6 und den Befehlsstellen 2 dar, das in bekannter Weise (siehe das Aktuator-Sensor-Interface für die Automation von Werner Kriesel, Otto W. Madelung, 1994 Carl Hanser Verlag München/Wien) aufgebaut ist und als Slave bezeichnet wird. Der wesentliche Slave-Baustein ist ein integrierter Schaltkreis (ASI-Chip). Er steht über die ASI-Busleitung 6 mit einem hier nicht dargestellten Master als Steuerzentrale in Verbindung. Einer der Schaltkontakte 3 jeder Befehlsstelle 2 ist mit einem der Eingänge E1,E2,E3,E4 direkt verbunden, während der andere Schaltkontakt 3 an einen DIP-Schalter 7 geführt ist und über diesen ebenfalls an einen der Eingänge E1,E2,E3,E4 zuschaltbar ist.

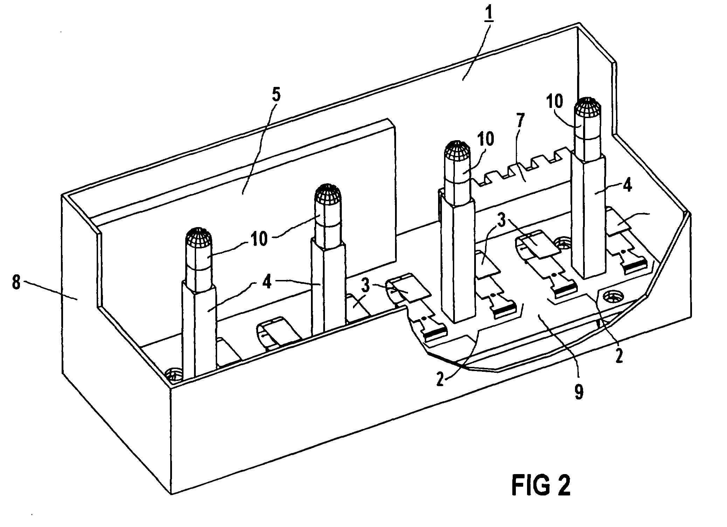

FIG 2 zeigt den konstruktiven Aufbau eines erfindungsgemäßen Fronttafelmoduls 1, das im wesentlichen aus einem Gehäuse 8, einer Trägerleiterplatte 9 den Schaltkontakten 3, den Lampenfassungen 4, dem ASI-Busmodul 5 und dem DIP-Schalter 7 aufgebaut ist. Das Gehäuse 8 ist zu einer Seite hin offen ausgebildet und trägt dieser gegenüberliegend am Boden die Trägerleiterplatte 9, auf der die Schaltkontakte 3 und die Lampenfassungen 4 für die vier Befehlsstellen 2 angeordnet sind. Die elektrische Schaltung gemäß FIG 1 ist auf dieser Trägerleiterplatte 9 realisiert, auf der zusätzlich das ASI-Busmodul 5 und der DIP-Schalter 7 aufsteckt und mit dieser verlötet ist. Die Befehlsstellen 2 sind dem Raster der Befehls-/Meldegeräte, die in einer Fronttafel plaziert sind, angepaßt angeordnet. Die Schaltkontakte 3 sind hier als Kontaktfedern bzw. Drahtbügel ausgeführt, die mit einem Ende in die Trägerleiterplatte 9 eingelötet sind und mit dem anderen Ende bei Betätigung auf ein Lötpad auf der Leiterplatte 9 drücken und damit elektrisch kontaktieren. Alternativ hierzu ist die Verwendung von Lötschaltelementen möglich. Die Lampenfassungen 4 bestehen aus Einlötsockeln, in die bei Bedarf eine geeignete Lampe 10 eingesteckt werden kann. Das Fronttafelmodul 1 ist in seinen Abmessungen hier beispielsweise vier nebeneinander in einer Fronttafel eingesetzten Befehls-/Meldegeräten angepaßt und von der Rückseite der Fronttafel aus auf die Befehls-/Meldegeräte aufmontiert, wobei die Lampen 10 in die Meldegeräte eintauchen und andererseits bei Betätigung von Befehlsgeräten die Schaltkontakte 3 schließen.

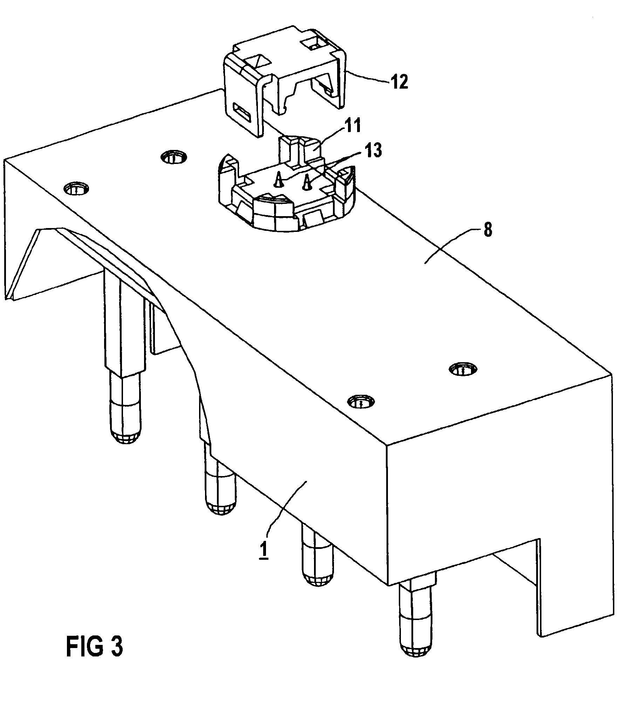

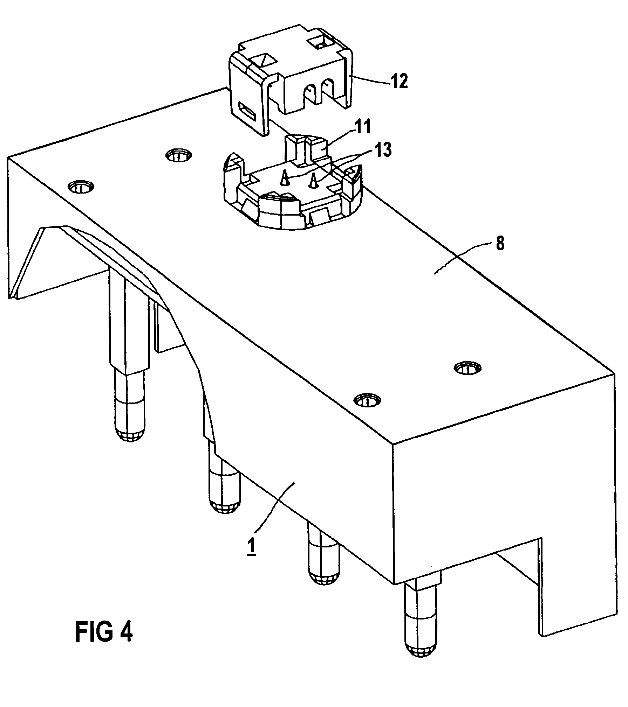

An der Unterseite des Fronttafelmoduls 1 ist gemäß FIG 3 und FIG 4 eine aus einem Sockel 11 und einer Klammer 12 bestehende Kontaktierungseinrichtung befestigt. Der Sockel 11 weist zwei Kontaktspitzen 13 auf, die mit dem ASI-Modul 5 in Verbindung stehen. Die Klammer 12 ist mit einer der Formcodierung der Busleitung 6 angepaßten Ausnehmung 14 versehen, in die die Busleitung 6 einlegbar ist, um sie dann durch Aufrasten auf den Sockel 11 mit den Kontaktspitzen 13 mittels Durchdringungstechnik zu kontaktieren (siehe FIG 3). Zur Kontaktierung von Normallitze als Busleitung 6 wird die Klammer 12 in der gemäß FIG 4 dargestellten Ausführung realisiert. Dabei besteht die Möglichkeit, das ASI-Busmodul 5 von jeder beliebigen Richtung mit der Busleitung 6 zu kontaktieren.

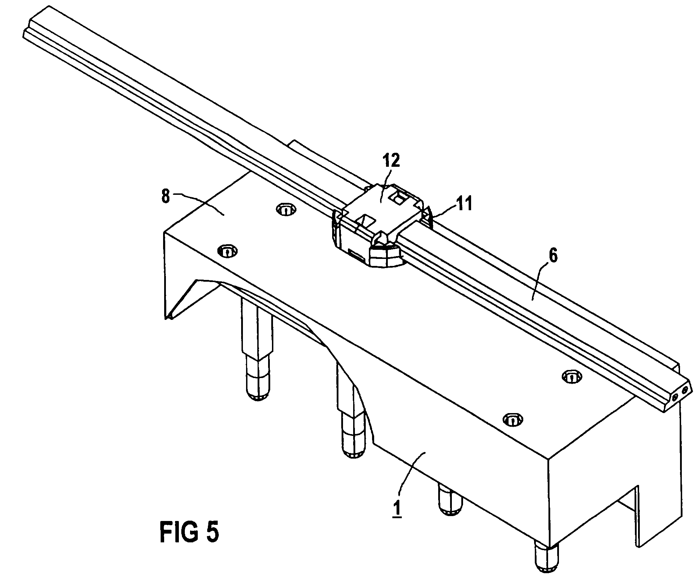

In FIG 5 ist die Unterseite des Fronttafelmoduls 1 mit kontaktierter, formcodierter Busleitung 6 dargestellt.

Neben der einfacheren und sicheren Montage bringt das erfindungsgemäße Fronttafel-Modul 1 den Vorteil mit sich, daß es nur eine einzige Adresse zum Konfigurieren mehrerer Befehlsstellen benötigt. Die Anzahl von ankoppelbaren Befehlsstellen 2 richtet sich nach der verfügbaren Anzahl der Eingänge und Ausgänge des ASI-Busmoduls 5.

Mit dem DIP-Schalter 7 läßt sich eine größere Flexibilität bei der Ausrüstung der Befehlsstellen 2 erreichen. Ist zum Beispiel ein Befehlsgerät der vier Befehlsstellen 2 ein Knebelschalter für Links- und Rechtslauf und an einer anderen Befehlsstelle nur ein Leuchtmelder vorhanden, so kann über den DIP-Schalter 7 dessen nicht benötigter Eingang auf den zweiten Schaltkontakt des Knebelschalters umgeleitet werden.

Obwohl die vorliegende Erfindung unter Bezugnahme auf die in der beigefügten Zeichnung dargestellte Ausführungsform erläutert ist, sollte berücksichtigt werden, daß damit nicht beabsichtigt ist, die Erfindung nur auf die dargestellte Ausführungsform zu beschränken, sondern alle möglichen Änderungen, Modifizierungen und äquivalente Anordnungen, soweit sie vom Inhalt der Patentansprüche gedeckt sind, einzuschließen.

## Patentansprüche

1. Fronttafelmodul (1) zur Anbindung einer Gruppe von Befehl-/Meldegeräten, die in einer Fronttafel eingebaut sind, an eine Busleitung (6), mit einem Gehäuse (8), das eine Kontaktierungseinrichtung (11,12,13) zum Anschluß an die Busleitung (6), das ein Busmodul (5) mit mehreren Ein-(E1,E2,E3,E4) und/oder Ausgängen (A1,A2,A3,A4) und das mehrere Befehlsstellen (2) aufweist, die dem Raster der Befehls-/Meldegeräte angepaßt angeordnet und mit den Ein- und/oder Ausgängen (A1,A2,A3,A4) verbunden sind.

2. Fronttafelmodul nach Anspruch 1, **dadurch gekennzeichnet,** daß jede Befehlsstelle (2) mindestens einen Schaltkontakt (3) und eine Lampenfassung (4) beinhaltet.

3. Fronttafelmodul nach Anspruch 1 oder 2, **dadurch gekennzeichnet,** daß ein DIP-Schalter (7) vorgesehen ist, über den nicht direkt mit dem Busmodul (5) verbundene Schaltkontakte (3) von Befehlsstellen (2) an nicht benötigte Eingänge (E1,E2,E3,E4) des Busmoduls (5) zuschaltbar sind.

4. Fronttafelmodul nach einem der vorangehenden Ansprüche, **dadurch gekennzeichnet,** daß die Kontaktierungseinrichtung (11,12,13) an der Unterseite des Gehäuses (8) von außen zugänglich angebracht ist und einen Sockel (11) mit Kontaktspitzen (13) aufweist, auf dem eine Klammer (12) mit einer Ausnehmung (14) zur Aufnahme der Busleitung (5) aufrastbar ist.

5. Fronttafelmodul nach einem der vorangehenden Ansprüche, **dadurch gekennzeichnet,** daß die Schaltkontakte als Drahtbügel (3) ausgeführt sind.
